# EUROPEAN PATENT APPLICATION

(11) **EP 1 914 571 A2**
(43) Date of publication of application: **23.04.2008**
(21) Application number: 07016076.7
(22) Date of filing: 16.08.2007
(51) Int. Cl.: G02B 5/30

(54) **System and methods for manufacturing wire grid polarizers**

(30) Priority: 16.08.2006 KR 20060076959
(71) Applicant: Samsung Electronics Co., Ltd., Yeongtong-gu Suwon-city, Gyeonggi-do 442-742 (KR)
(72) Inventor: Choo, Dae Ho, Seongnam-si, Gyeonggi-do 463-909 (KR)
(74) Representative: Weitzel, Wolfgang

(57) **Abstract**

Systems and methods for manufacturing wire grid polarizers include a deposition unit for forming a thin metal film layer on a substrate, a coating unit for applying a photoresist on the thin metal film layer and for baking the photoresist, a stamping unit, including a stamp having a pattern formed thereon, for pressing the stamp onto the photoresist and thereby transferring the pattern of the stamp to the photoresist, and a curing unit for curing the photoresist.

## Description

### BACKGROUND

The present invention relates generally to systems and methods for manufacturing wire grid light polarizers, and more particularly, to systems and methods for manufacturing wire grid polarizers by applying Nano Imprint Lithography (NIL) techniques to large substrates so as to shorten processing times and increase processing precision.

Wire grid light polarizers are stripe-like metal wire grid patterns that have a line width and spacing that are smaller than the size of the respective wavelengths of red (R), green (G) and blue (B) light, *i.e.,* within a visible light region detectable by human beings, which are formed on a glass substrate or a film using thin film processing methods for the purpose of forming a light polarizer thereon. When light enters a metal wire grid pattern having a line width and spacing ranging from about 50 nm to 200 nm, *i.e.*, smaller than the wavelength of light in the blue region, *i.e.,* the minimum optical wavelength of light that is visible, only the light entering in parallel to the portion of the pattern in which the foregoing spacing of the metal wire grid pattern exists will pass through the metal wire grid pattern, and the light entering perpendicular to the pattern will be blocked, and thus, the wire grid polarizer thereby performs a polarizing function, since, in terms of its optical characteristics, the light propagates while vibrating in directions both parallel and perpendicular to the direction of propagation.

Such polarizers have advantages in that, when a wire grid polarizer is applied to a liquid crystal display (LCD), it is possible to manufacture very thin LCDs, simplify the processes of manufacturing the displays, and reduce the production costs thereof. However, since wire grid polarizers are manufactured through a process of patterning a thin metal thin on a "nano" scale of about 50 nm to 200 nm, problems are encountered, including that it is difficult to increase the size of the wire grid polarizer to the extent necessary to apply it to the entire surface of the liquid crystal display at one time, and economic efficiency is thus impaired due to the increase in the manufacturing processing time necessary to apply it in multiple steps.

In particular, the process of manufacturing wire grid polarizers using the most widely used process, a nano imprint lithography process, which determines the increase possible in the size of the wire grid polarizer and the manufacturing processing time thereof, is basically a stamping process that involves the transfer of a "stamp," on which a particular metal grid pattern has been formed, onto a display substrate. However, using the prior art stamping process has resulted in a substantial problem, in that the overall manufacturing processing time is substantially increased due to the delay in the time at which the performance of various sequential processes, such as a pressing process, a pressurizing process and a curing process, can be performed, because these processes are performed in the same chamber as the transferring process.

Further, there is a problem of decreased productivity because the size of the stamp is smaller than that of the LCD being processed. To overcome this problem, a method of continuously and repeatedly stamping a small stamp onto a large substrate is currently being used. However, additional problems arise with this method, in that the time required for performing the stamping process further increases, and the precision of the wire grid polarizer is significantly reduced, due to the occurrence of alignment errors.

### BRIEF SUMMARY

In accordance with the exemplary embodiments thereof disclosed herein, the present invention provides systems and methods for manufacturing wire grid polarizers that enable the size of the wire grid polarizers to be increased, their manufacturing processing time to be shortened, and the precision of their processing to be increased.

In one exemplary embodiment, a system for manufacturing a wire grid polarizer includes a deposition unit for forming a thin metal film layer on a substrate, a coating unit for applying a photoresist on the thin metal film layer and for baking the photoresist, a stamping unit, including a stamp on which a pattern is formed, for pressing the stamp onto the photoresist and thereby transfer the pattern of the stamp to the photoresist, and a curing unit for curing the photoresist.

The exemplary system further includes an etching unit for etching the thin metal film layer, an ashing unit for removing the photoresist, a loading unit for loading the substrate, a cleaning unit for cleaning the substrate, an unloading unit for unloading the substrate, and a plurality of carrying units for carrying the substrate between the other units.

The processing units are arranged in a manufacturing line, in the following order: The loading unit, the cleaning unit, the deposition unit, the coating unit, the stamping unit, the curing unit, the etching unit, the ashing unit and the unloading unit, and respective ones of the carrying units are provided between adjacent pairs of the other units.

The stamping unit includes a stamping chamber, a first substrate supporting unit provided in the stamping chamber and configured to support the substrate, and a pressing unit for applying pressure to the stamp so as to press the stamp on the substrate.

The stamp includes a base plate, first and second magnets having opposite polarities arranged in alternating fashion and embedded in a first surface of the base plate, and a plurality of unit stamps adhered to the first surface of the base plate.

The unit stamps each comprises a unit stamp substrate having opposite first and second surfaces and a fine pattern extending in one direction formed on the first surface of the unit stamp substrate. The unit stamp substrate may be formed of a silicon or a quartz wafer.

The pressing unit includes a pressing chamber, a gas pressure applying unit for injecting gas into the pressing chamber and applying gas pressure to an interior of the pressing chamber, a gas pressure correcting unit for maintaining uniformity of gas pressure applied to the interior of the pressing chamber, a gas supply source provided outside the pressing chamber and configured to supply gas for injection into the pressing chamber, and gas injection holes formed in the wall of the pressing chamber. The gas pressure correcting unit includes a plurality of spring members provided inside the pressurizing chamber.

The exemplary system may further include a stamp storing chamber for storing waiting stamps.

The curing unit includes a curing chamber, a second substrate supporting unit provided in the curing chamber and configured to support the substrate, and a curing source unit for curing the photoresist. The photoresist may be a UV-curable photoresist or a thermosetting photoresist, and the curing source unit includes a UV light source or a heater. The photoresist may also include a hybrid photoresist comprising a mixture of a UV-curable photoresist and a thermosetting photoresist.

The stamping unit further includes a UV light source for curing the UV-curable photoresist of the hybrid photoresist, and the curing source unit of the curing unit includes a heater for curing the thermosetting photoresist of the hybrid photoresist. The stamping unit further includes a UV light blocking unit for blocking part of the UV light radiated from the UV light source. The UV light blocking unit includes a metal film. The etching unit dry-etches the thin metal film layer.

An exemplary embodiment of a method of manufacturing a wire grid polarizer includes providing a substrate, forming a thin metal film layer on the substrate, applying a photoresist on the thin metal film layer, baking the substrate on which the photoresist is applied, providing a stamp having a pattern thereon, aligning the stamp with and pressing it on the photoresist of the substrate to thereby transfer the pattern of the stamp to the photoresist, curing the photoresist, separating the stamp from the substrate, and etching the thin metal film layer of the substrate.

Another exemplary method embodiment includes providing a substrate, forming a thin metal film layer on the substrate, applying a photoresist on the thin metal film layer, baking the substrate on which the photoresist has been applied, providing a stamp having a pattern thereon, aligning the stamp with and pressing it on the photoresist of the substrate to thereby transfer the pattern of the stamp to the photoresist, partially curing the photoresist, separating the stamp from the substrate, fully curing the photoresist, and etching the thin metal film layer of the substrate.

A better understanding of the above and many other features and advantages of the systems and methods for manufacturing wire grid polarizers of the present invention may be obtained from a consideration of the detailed description of some exemplary embodiments thereof below, particularly if such consideration is made in conjunction with the appended drawings, wherein like reference numerals are used to identify like elements illustrated in one or more of the figures thereof.

### BRIEF DESCRIPTION OF THE DRAWINGS

FIG 1 is a schematic functional block diagram of an exemplary embodiment of a system for manufacturing a wire grid polarizer in accordance with the present invention;
FIG 2 is a process flow diagram of the processes of an exemplary embodiment of a method for manufacturing a wire grid polarizer with the exemplary manufacturing system of FIG 1;
FIGS. 3A to 3F are schematic cross-sectional views of a substrate respectively illustrating sequential processes of the exemplary method for manufacturing a wire grid polarizer thereon with the exemplary system of FIG 1;
FIG 4 is a schematic elevation view of a first exemplary embodiment of a stamping unit and a curing unit of the exemplary system of the present invention;
FIG 5 is a process flow diagram of the processes carried out in the first embodiment of stamping and curing units of FIG 4;
FIGS. 6A and 6B are a schematic elevation view and a block diagram, respectively, of a second exemplary embodiment of stamping and curing units of the system;
FIG 7 is a process flow diagram of the processes carried out in the second embodiment of stamping and curing units of FIGS. 6A and 6B;
FIG 8 is a schematic elevation view of a third exemplary embodiment of stamping and curing units of the system;
FIG 9 is a process flow diagram of the processes carried out in the third embodiment of stamping and curing units of FIG 8;
FIG 10 is a schematic elevation view of a fourth exemplary embodiment of stamping and curing units of the system;
FIG 11 a process flow diagram of the processes carried out in the fourth embodiment of stamping and curing units of FIG 10;
FIG 12 is a schematic cross-sectional sectional view of an exemplary embodiment of a stamp in accordance with the present invention;
FIG 13 is a schematic elevation view of unit stamps being attached to a base plate;
FIG 14 is a schematic cross-sectional view of an alternative exemplary embodiment of a stamp in accordance with the present invention;
FIGS. 15A to 15D are schematic cross sectional views of a substrate respectively illustrating sequential steps an exemplary embodiment of a method for manufacturing a unit stamp in accordance with the present invention; and,
FIG 16 is a schematic elevation view an exemplary embodiment of a stamping unit of the exemplary system of the present invention.

### DETAILED DESCRIPTION

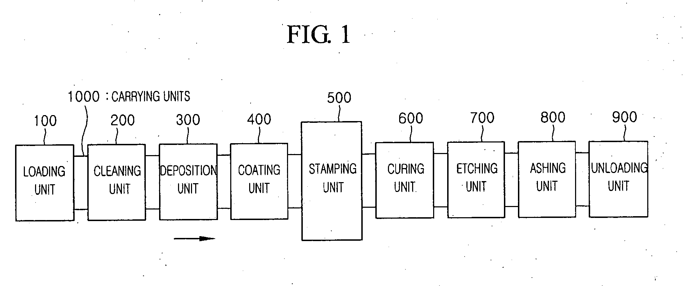

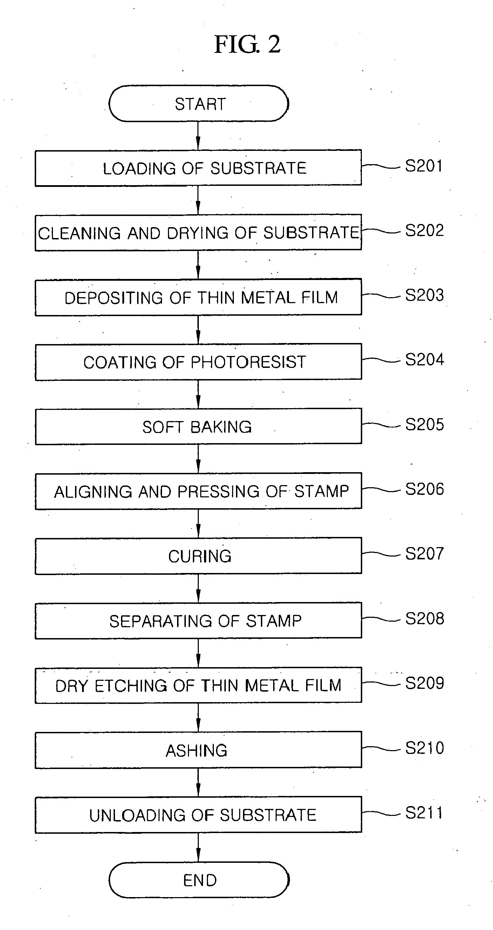

FIG 1 is a schematic functional block diagram of an exemplary embodiment of a system for manufacturing a wire grid polarizer in accordance with the present invention, and FIG 2 is a process flow diagram of an exemplary embodiment of a method for manufacturing a wire grid polarizer using the exemplary manufacturing system of FIG 1.

Referring to FIG 1, the exemplary wire grid polarizer manufacturing system includes a loading unit 100, a cleaning unit 200, a deposition unit 300, a coating unit 400, a stamping unit 500, a curing unit 600, an etching unit 700, an ashing unit 800, an unloading unit 900 and a plurality of carrying units 1000.

As illustrated in FIG 1, the units of the system are arranged in a manufacturing line in the sequential order of: The loading unit 100, the cleaning unit 200, the deposition unit 300, the coating unit 400, the stamping unit 500, the curing unit 600, the etching unit 700, the ashing unit 800 and the unloading unit 900, thereby constituting an "inline" system. In the particular embodiment illustrated, respective ones of the carrying units 1000 are provided between adjacent pairs of the processing units, and serve to carry a substrate that has been processed in the first unit of the adjacent pair to the next adjacent unit.

In an inline manufacturing system, a primary factor affecting the entire processing time is the unit processing time ("tact time") of each of the processing units. That is, it is necessary to make the unit processing time in each of the respective processing units relatively uniform, and to minimize the time taken after any one process is completed until a subsequent process commences. However, one of problems of the prior art wire grid polarizer manufacturing systems is that the stamping and curing processes are sequentially performed in a single unit, thereby resulting in a significantly increased processing time of that unit relative to the others, which in turn increases the effective processing time of the other units commensurately and results in a substantial increase of the total manufacturing processing time.

Accordingly, in the exemplary system of the present invention, the stamping unit 500 and the curing unit 600 are provided as separate units, unlike systems of the prior art in which the stamping and curing processes are performed in a single unit. As a result, the unit processing time required in each of the stamping unit 500 and the curing unit 600 is decreased, and the unit processing time in each of the separate stamping 500 and curing units 600 is adjusted to be similar to the respective unit processing times of each of other units, thereby minimizing waiting time, and accordingly, minimizing the total manufacturing processing time.

The functions of the respective units of the exemplary system and the entire process for manufacturing a wire grid polarizer with the exemplary manufacturing systems of the invention are described below with reference to FIGS. 1 and 2.

First, the loading unit 100 loads a substrate (not illustrated) upon which a wire grid polarizer is to be formed into the system (S201). The substrate loaded by the loading unit 100 is carried to the cleaning unit 200 by a carrying unit 1000, and the cleaning unit 200 cleans the carried substrate (S202). The cleaned substrate is carried to the deposition unit 300 by another carrying unit 1000, and the deposition unit 300 forms a thin metal film layer (not illustrated) on the substrate (S203). In this particular embodiment, the thin metal film layer is formed by depositing a metal material having high reflectance, such as aluminum (Al), using a sputtering method. However, the material and method for forming the same are not limited thereto, and various other materials and forming methods may be.

The substrate on which the thin metal film layer has been formed is carried to the coating unit 400 by another carrying unit 1000, and the coating unit 400 applies a layer of photoresist having a resolution on the nano scale to the thin metal film layer using a spin coating method or a slit coating method (S204). Then, the photoresist is subjected to a soft baking process at a selected temperature and for a selected amount of time (S205).

The soft-baked substrate is carried to the stamping unit 500 by another carrying unit 1000. The stamping unit 500 includes a stamp (not illustrated) having a selected pattern thereon. The stamping unit 500 aligns the stamp above the substrate, and then presses it onto the photoresist so as to transfer the pattern on the stamp to the photoresist on the substrate (S206).

The substrate onto which the stamp has been pressed is then carried to the curing unit 600 by another carrying unit 1000, and the curing unit 600 cures the photoresist (S207). After the photoresist has been cured, the stamp is separated from the substrate (S208).

After the stamp has been separated from the substrate, the substrate is carried to the etching unit 700 by another carrying unit 1000, and the etching unit 700 etches the thin metal film layer using the photoresist that has been patterned by the stamp as an etching mask (S209). In this particular embodiment, the thin metal film layer is etched using a dry etching method, such as a high density Reactive Ion Etching (RIE) method, a Plasma Etching (PE) method, or an Inductively Coupled Plasma (ICP) method.

After the etching process is complete, the substrate is carried to the ashing unit 800 by another carrying unit 1000, and the ashing unit 800 finishes the wire grid polarizer by removing the photoresist that was used as the etching mask to leave the finished wire grid polarizer remaining on the substrate (S210). The substrate with the finished wire grid polarizer thereon is carried to the unloading unit 900 by another carrying unit 1000, and the unloading unit 900 unloads the substrate with the finished wire grid polarizer thereon from the system (S211).

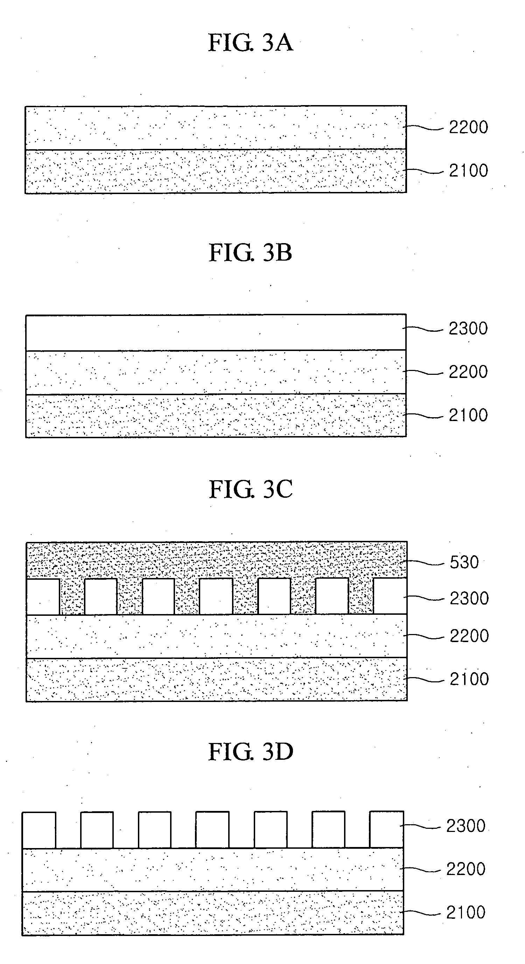

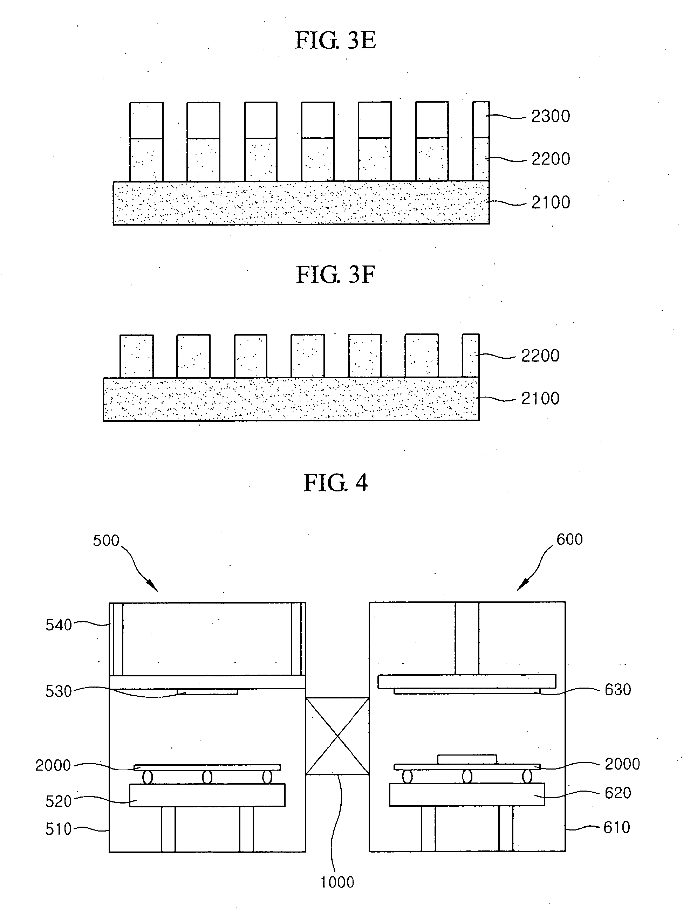

FIGS. 3A to 3F are schematic cross-sectional views of a substrate respectively illustrating sequential steps of the exemplary method for manufacturing a wire grid polarizer with the exemplary manufacturing system of FIG. 1. Referring to FIGS. 3A to 3F, first, a thin metal film layer 2200 is formed on a substrate 2100 (see FIG 3A). As described above, in this particular embodiment, the thin metal film layer 2200 is deposited using a sputtering method and a metal material having a high reflectance, such as aluminum (A1).

Next, a layer of photoresist 2300 is applied over the thin metal film layer 2200 using a spin coating method or a slit coating method (S204). The photoresist is then softly baked at a selected temperature and for a selected amount of time (see FIG 3B).

After a stamp 530 having a pattern thereon is aligned above the substrate, the stamp 530 is pressed down onto the soft-baked photoresist 2300 on the substrate (see FIG 3C). Thus, when the photoresist 2300 is cured and the stamp 530 separated from it, the pattern on the stamp 530 is thereby transferred to the photoresist 2300, resulting in a pattern that is the opposite of the pattern of the stamp 530 being formed in the photoresist 2300 (see FIG. 3D).

The thin metal film layer 2200 is then etched using the photoresist 2300, in which the "opposite" pattern above has been formed, as an etching mask (see FIG 3E). Then, after the photoresist 2300 remaining on the thin metal film layer 2200 has been removed in the ashing process, the thin metal film layer 2200 left remaining on the substrate 2100 has a pattern formed therein, such as a wire grid pattern, and the desired wire grid polarizer is thereby realized on the substrate.

In the following description, various alternative exemplary embodiments of the novel stamping unit 500 and curing unit 600 of the manufacturing systems of the present invention are described, and descriptions of the other units and processes described above are omitted for brevity.

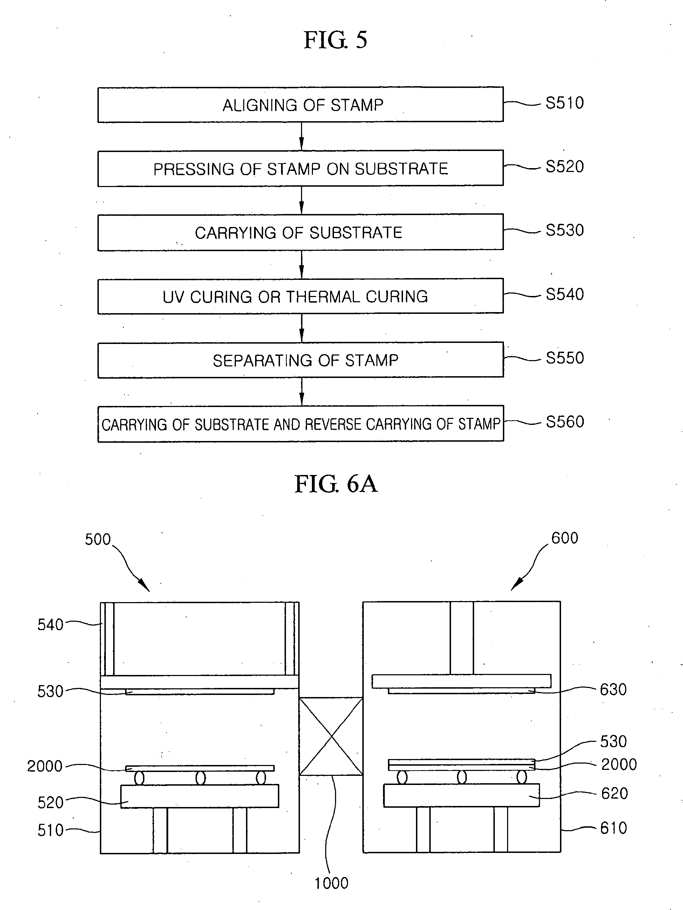

FIG 4 is a schematic elevation view of a first exemplary embodiment of stamping and curing units 500 and 600 of an exemplary manufacturing system, and FIG. 5 is a process flow diagram of the processes carried out in the first embodiment of stamping and curing units of FIG 4.

Referring to FIG. 4, the stamping unit 500 includes a stamping chamber 510, a first substrate supporting unit 520 and a pressing unit 540, while the curing unit 600 includes a curing chamber 610, a second substrate supporting unit 620, and a curing source unit 630.

The stamping chamber 510 of the stamping unit 500 provides a space in which various components of the unit are installed. The first substrate supporting unit 520 is disposed in the stamping chamber 510 and serves to support a substrate 2000 carried into the stamping chamber 510. In this particular embodiment, the substrate 200 refers to a substrate on which a thin metal film layer and a photoresist have previously been sequentially formed through the unit processes performed in preceding units, such as the cleaning unit, the deposition unit and the coating unit.

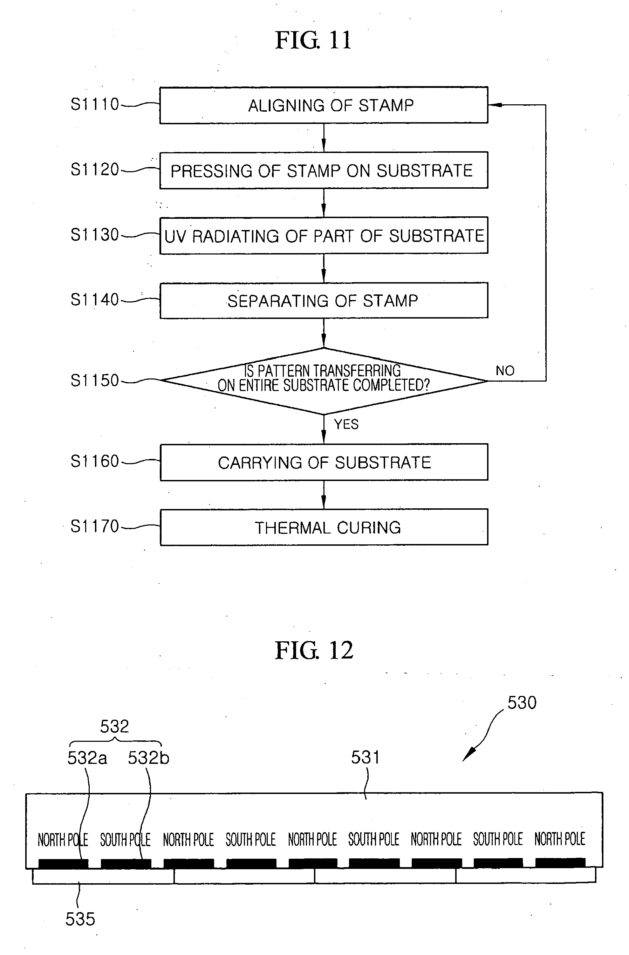

A striped pattern (not illustrated) having a selected line width and line spacing is formed on one surface of a stamp 530. The stamp 530 functions to transfer the striped pattern to a layer of photoresist that is applied to the substrate. The structure of the stamp 530 and the method of manufacturing the same is described in more detail below with reference to FIGS. 12 to 15.

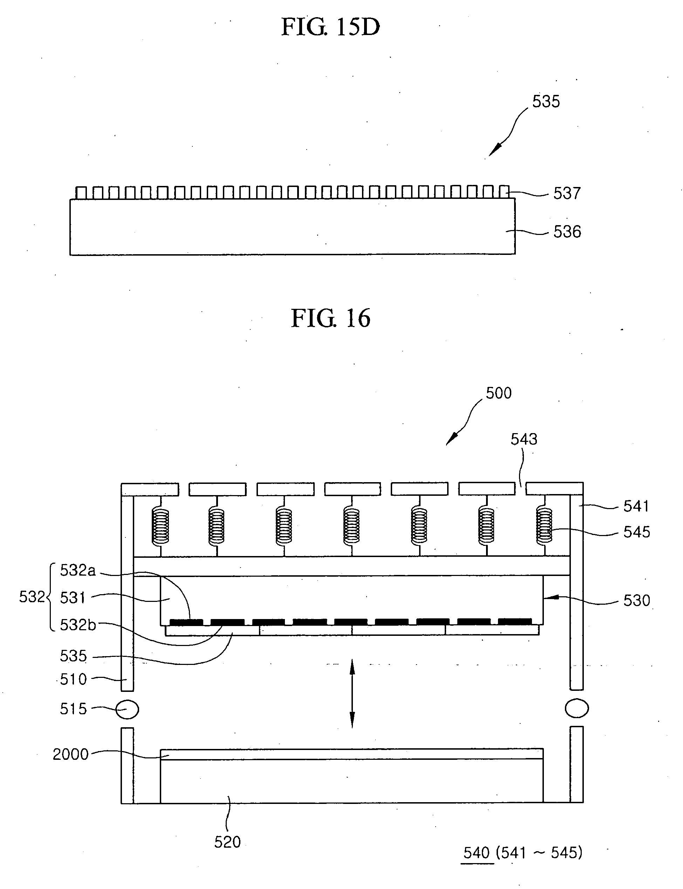

The pressing unit 540 is disposed in the upper portion of the stamping chamber 510, and functions to press the stamp 530 onto the substrate 2000 by moving the stamp 530 upward and downward. The structure and operation of the pressing unit 540 is described in more detail below with reference to FIG. 16.

In the particular embodiment of FIG. 4, since the first substrate supporting unit 520 is disposed in the lower portion of the stamping chamber 510 and the pressing unit 540 is disposed in the upper portion thereof, the pressing unit 540 presses the stamp 530 on the substrate 2000 by moving the stamp 530 downward toward the first substrate supporting unit 520. However, the direction of movement of the stamp 530 is not limited thereto. For example, in an alternative embodiment, the positions of the first substrate supporting unit 520 and the pressing unit 540 may be reversed, *i.e.,* the pressing unit 540 may be disposed in the lower portion of the stamping chamber 510, and the first substrate supporting unit 52 may be disposed in the upper portion thereof. As a result of this arrangement, impurities can be prevented from falling on the substrate, and thus, contamination of the substrate with the impurities can be minimized.

The curing unit 600 includes a curing chamber 610, a second substrate supporting unit 620 provided in the curing chamber 610 and configured to support the substrate 2000 carried from the stamping unit 500, and a curing source unit 630 for curing the photoresist on the substrate. The photoresist, which is applied to the substrate in the coating unit 400 (see FIG. 1) situated upstream of the stamping unit 500, may comprise a UV-curable photoresist, including an acrylate polymer, or alternatively, a thermosetting photoresist, such as an epoxy polymer. Accordingly, the curing source unit 630 may use a UV light source or a heater, depending on the type of photoresist being applied to the substrate in the coating unit.

The process of manufacturing a wire grid polarizer with the first exemplary embodiment of stamping and curing units 500 and 600 of FIG 4 is described in more detail below with reference to FIGS. 4 and 5.

First, the substrate 2000 on which a thin metal film layer and a photoresist have been sequentially formed is carried to the stamping unit 500 and placed securely on the first substrate supporting unit 520 such that the stamp 530 is disposed above and aligned with the substrate 2000 (FIG 5, S510).

When the stamp 530 is aligned above the substrate 2000, the stamp 530 is pressed down onto the photoresist on the upper surface of the substrate 2000 by the pressing unit 540 (S520).

The substrate 2000 onto which the stamp 530 has been pressed is then carried to the curing unit 600 by an intermediate carrying unit 1000 (S530) and placed securely on the second substrate supporting unit 620 with the stamp 530 pressed thereon facing up, and the curing source unit 630 then cures the photoresist on the substrate 2000 by, e.g., irradiating the substrate with UV light or heat (S540). When the photoresist curing process is completed, the stamp 530 is separated from the substrate (S550) and returned to the stamping unit 500 for reuse.

After the stamp 530 has been removed from the substrate 2000, the substrate is carried to the etching unit 700 (see to FIG. 1) immediately downstream of the curing unit 600 to perform subsequent processes thereon.

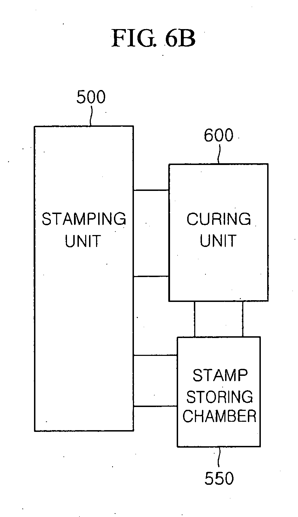

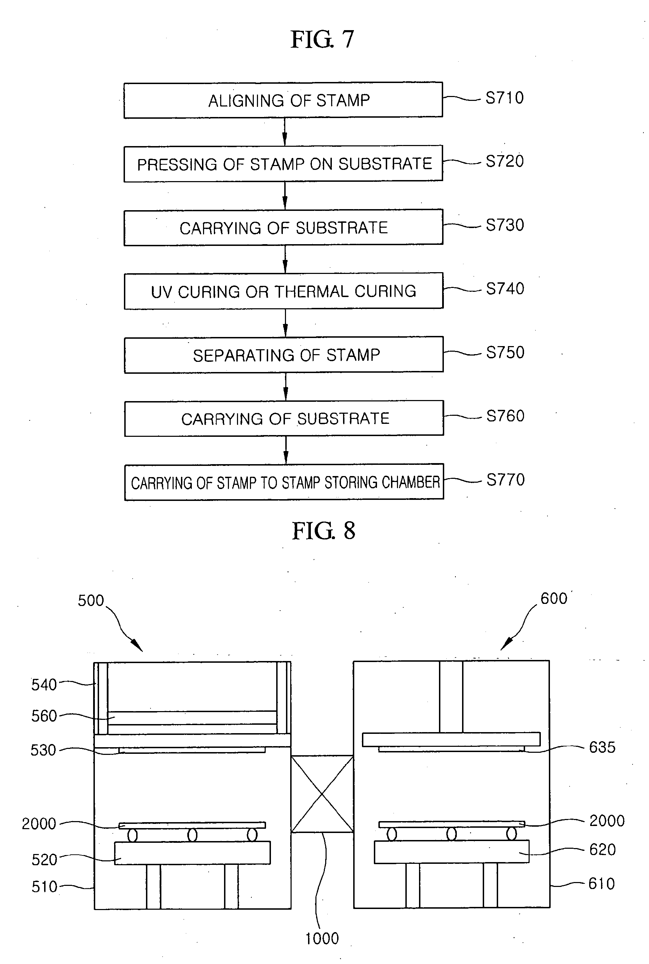

FIGS. 6A and 6B are a schematic elevation view and a block diagram, respectively, of a second exemplary embodiment of stamping and curing units 500 and 600 of an exemplary manufacturing system, and FIG. 7 is a process flow diagram of the processes carried out in the second embodiment of stamping and curing units of FIGS. 6A and 6B.

The second embodiment of FIGS. 6A to 7 is different from the first exemplary embodiment of FIGS. 4 and 5 above in that a plurality of stamps is used, but except for that, is otherwise similar. The following discussion therefore focuses mainly on the differences between the two embodiments.

Referring to FIGS. 6A and 6B, the stamping unit 500 of the second embodiment includes a stamping chamber 510, a first substrate supporting unit 520, a stamp 530, a pressing unit 540 and a stamp storing chamber 550, and the curing unit 600 includes a curing chamber 610, a second substrate supporting unit 620, and a curing source unit 630.

The stamping chamber 510 of the stamping unit 500 provides a space in which various components of the stamping unit 500 are disposed, and the first substrate supporting unit 520 is disposed in the stamping chamber 510 and serves to support a substrate 2000 carried into the stamping chamber 510. A striped pattern (not shown) having a selected line width and spacing is formed on one surface of a stamp 530. The stamp 530 functions to transfer the striped pattern to a layer of photoresist applied to the substrate, and in the particular embodiment illustrated, a plurality of stamps is used, in the manner described below.

The pressing unit 540 is disposed in the upper portion of the stamping chamber 510, and functions to press the stamp 530 onto the photoresist on the substrate 2000 by moving the stamp 530 upward and downward. The stamp storing chamber 550 stores other, separate stamps, *i.e.*, other than the stamp disposed in the stamping chamber 510 of the stamping unit 500, and functions to provide these waiting stamps to the stamping chamber 510 when needed.

As will be understood, since the substrate which was stamped in the stamping unit 500 is carried to the curing unit 600 while carrying the stamp 530 pressed thereon, no stamp remains in the stamping chamber 510. As a result, in order to stamp the next substrate, it is necessary to wait for the stamp that is separated from the substrate in the curing unit to be carried back to the stamping chamber 510 after the photoresist curing process is completed in the curing unit 600. However, in the particular embodiment of FIG. 6A, when a stamp storing chamber 550 is added to the stamping unit 500 and one or more additional stamps are provided therein, it is not necessary to wait until the stamp in use on the substrate in the curing unit is carried back after completion of the curing process because another stamp that is waiting in the stamp storing chamber 550 can be carried from the storing chamber to the stamping chamber 510 while the curing process is going on, and the waiting time can therefore be reduced.

The process of manufacturing a wire grid polarizer using the second embodiment of stamping and curing units 500 and 600 is described in more detail below with reference to FIGS. 6A to 7.

First, the substrate 2000 on which a thin metal film layer and a photoresist layer have been sequentially formed is carried to the stamping unit 500 and placed securely placed on the first substrate supporting unit 520. The stamp 530 is disposed above and aligned with the substrate 2000 (FIG. 7, S710). When the stamp 530 is aligned above the substrate 2000, the stamp 530 is pressed onto the substrate 2000 by the pressing unit 540 (S720).

The substrate 2000 on which the stamp 530 has been pressed is then carried to the curing unit 600 by an intermediate carrying unit 1000 (S730). Simultaneously, another stamp stored in the stamp storing chamber 550 is carried into the stamping chamber 510, and preparation is begun for stamping the next substrate in line.

The substrate 2000 with the stamp 530 pressed thereon and carried to the curing unit 600 is placed securely on the second substrate supporting unit 620, and the photoresist on the substrate is cured with the curing source unit 630 by irradiating it with UV light or heat (S740). When the process of curing the photoresist is completed, the stamp 530 is separated from the substrate (S750). The separated stamp 530 is then carried back to the stamp storing chamber 550 and is stored therein, and the substrate 2000 is carried to the etching unit 700 (see FIG 1) situated immediately downstream of the curing unit 600 for subsequent processing.

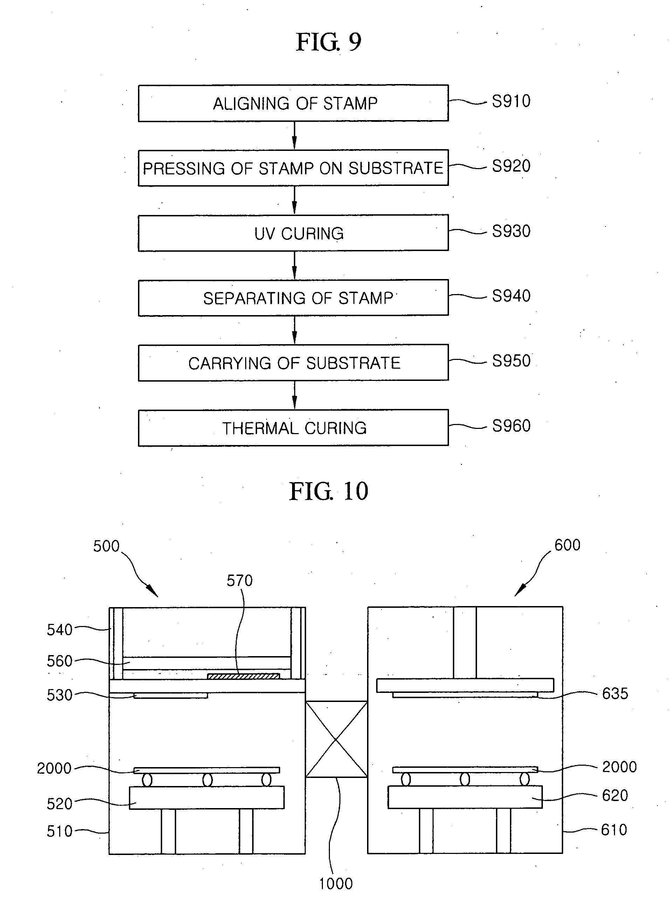

FIG 8 is a schematic elevation view of a third exemplary embodiment of stamping and curing units 500 and 600 of an exemplary manufacturing system, and FIG 9 is a process flow diagram of the processes carried out in the third exemplary embodiment of stamping and curing units of FIG 8.

The third embodiment of stamping and curing units 500 and 600 of FIGS. 8 and 9 is similar to the first and second embodiments thereof described above, but is different in that the stamping unit and curing unit each performs a curing process, and the time at which the stamp is separated from the substrate is different in the third embodiment. The following description therefore focuses mainly on the differences in construction and operation of the third embodiment.

Referring to FIG. 8, the stamping unit 500 of the third embodiment includes a stamping chamber 510, a first substrate supporting unit 520, a stamp 530, a pressing unit 540 and a UV light source 560, while the curing unit 600 includes a curing chamber 610, a second substrate supporting unit 620 and a heater 635.

The photoresist that is applied to the substrate in the coating unit 400 (see FIG 1) situated upstream of the stamping unit 500 can comprise a "hybrid" photoresist, *i.e.*, one in which a UV-curable photoresist and a thermosetting photoresist are mixed. In such a case, the UV-curable photoresist can include, for example, an acrylate polymer, and the thermosetting photoresist can include, for example, an epoxy polymer.

In light of the foregoing, the stamping unit 500 of the third embodiment of FIGS. 8 and 9 is additionally provided with the UV light source 560 for curing the UV-curable portion of the hybrid photoresist mixture. The UV light source 560 can be provided in the pressing unit 540 disposed in an upper portion of the stamping chamber 510. However, the position at which the UV light source 560 is disposed is not limited thereto, and the UV light source 560 can be provided at various other positions in the stamping chamber 510.

The curing source of the curing unit 600 of the third embodiment comprises a heater 635 for curing the thermosetting portion of the hybrid photoresist mixture.

The process of manufacturing a wire grid polarizer with the third exemplary embodiment of stamping and curing units 500 and 600 is described in more detail below with reference to FIGS. 8 and 9.

First, the substrate 2000 on which a thin metal film layer and a photoresist have been sequentially formed is carried to the stamping unit 500 and is securely placed on the first substrate supporting unit 520. The stamp 530 is then positioned above and aligned with the substrate 2000 (S910). In this particular embodiment, the photoresist formed on the substrate is, as described above, a hybrid photoresist comprising a mixture of a UV-curable photoresist and a thermosetting photoresist.

When the stamp 530 is aligned above the substrate 2000, the stamp 530 is pressed onto the photoresist on the substrate 2000 using the pressing unit 540 (S920). In this particular embodiment, the stamp 530 corresponds in size to the substrate 2000, and accordingly, the pattern of the stamp is transferred to the substrate in one pressing operation.

Next, photoresist is partially cured, *i.e.,* the UV-curable portion of the hybrid photoresist mixture on the substrate is cured by radiating UV light onto the substrate using the UV light source 560 (S930) of the pressing unit 500. The stamp 530 is then separated from the substrate (S940).

The substrate 2000 from which the stamp 530 has been removed is then carried to the curing unit 600 by an intermediate carrying unit 1000 (S950) and placed securely on the second substrate supporting unit 620, and the photoresist on the substrate is then fully cured, *i.e.,* the thermosetting portion of the hybrid photoresist mixture on the substrate is cured by radiating heat onto it with the heater 635 of the curing unit 600 (S960). The substrate 2000 is then carried to the etching unit 700 (see FIG. 1) disposed downstream of the curing unit 600 for subsequent processing.

As described above, when a hybrid photoresist comprising a mixture of a UV-curable photoresist and a thermosetting photoresist is used as the photoresist, if a stamp is pressed onto the hybrid photoresist and the photoresist then irradiated with UV light, the UV-curable portion of the photoresist is cured and its shape therefore becomes fixed. In this condition, even though the stamp is separated from the hybrid photoresist, the cured portion of the photoresist efficiently maintains the pattern transferred thereto by the stamp. When the photoresist is then carried to the curing unit and the thermosetting portion of the hybrid photoresist mixture is cured through a thermo-curing process, the hybrid photoresist is thereby fully cured.

Accordingly, when the above "dual curing" method is respectively applied in the third exemplary embodiment of stamping and curing units 500 and 600, the unit processing time can be reduced to the minimum.

FIG. 10 is a schematic elevation view of a fourth exemplary embodiment of stamping and curing units of an exemplary manufacturing system, and FIG 11 a process flow diagram of the processes carried out in the fourth embodiment of stamping and curing units of FIG 10.

The fourth exemplary embodiment of FIGS. 10 and 11 is similar to the third embodiment of FIGS. 8 and 9 described above, except that the size of the stamp provided is smaller than that of the substrate. The following discussion therefore mainly focuses on the differences in construction and operation of the fourth embodiment.

Referring to FIG. 10, the stamping unit 500 of the fourth embodiment includes a stamping chamber 510, a first substrate supporting unit 520, a stamp 530, a pressing unit 540, a UV light source 560, and a UV light blocking unit 570, and the curing unit 600 includes a curing chamber 610, a second substrate supporting unit 620 and a heater 635.

A hybrid photoresist comprising a mixture of a UV-curable photoresist and a thermosetting photoresist is used as the photoresist that is applied to the substrate in the coating unit 400 (see FIG. 1) situated upstream of the stamping unit 500. The stamping unit 500 is provided with the UV light source 560 to cure the UV-curable portion of the hybrid photoresist mixture disposed on the substrate.

As mentioned above, the stamp 530 used in the fourth exemplary embodiment is smaller than the substrate 2000. Accordingly, the process of pressing the stamp 530 on the substrate must be repeatedly performed, at least two times, to completely transfer the pattern of the smaller stamp 530 to the photoresist on the larger substrate. As will be understood, if the above, dual curing technique of pressing the stamp 530 on the hybrid photoresist of the substrate and then curing it with UV light source 560 is used, it is necessary that the regions of the photoresist that have not been pressed by the stamp 530 not be irradiated with the UV light so as to prevent them from being cured until after they have been imprinted with the stamp. Accordingly, the UV light blocking unit 570 is provided in a lower portion of the UV light source 560 to block a part of the UV light that is radiated from the UV light source 560 onto the photoresist. In this embodiment, the UV light blocking unit 570 is formed of a metal film made of a metal material, such as chromium or aluminum.

The process of manufacturing a wire grid polarizer with the fourth exemplary embodiment of stamping and curing units 500 is described in more detail below with reference to FIGS. 10 and 11.

First, the substrate 2000 on which a thin metal film layer and a photoresist have been sequentially formed is carried to the stamping unit 500 and is placed securely on the first substrate supporting unit 520. The stamp 530 is then positioned above and aligned with the substrate 2000 (FIG 11, S1110). As described above, in this embodiment, the photoresist formed on the substrate comprises a hybrid photoresist, *i.e.,* a mixture of UV-curable and thermosetting photoresists. Further, the stamp 530 is smaller in size than the substrate 2000.

When the stamp 530 is initially aligned above the substrate 2000, the stamp 530 is pressed down onto the substrate 2000 using the pressing unit 540 (S1120). Next, the UV-curable portion of the hybrid photoresist mixture is partially cured by radiating UV light onto only a part of the substrate, that is, the region on which the stamp is pressed, using the UV light source 560, and the UV light blocking unit 570 (S1130) is used to block the UV light from the regions of the photoresist that are not to be partially cured. The stamp 530 is then separated from the partially cured region of photoresist on the substrate (S1140).

The foregoing process steps are then performed iteratively and repeatedly until the desired stamp pattern has been transferred to the entire region of the photoresist on the substrate (S1150). Then, after the final iteration, *i.e.,* after the desired pattern has been formed in the entire surface of the photoresist on the substrate 2000, and the entire surface of the photoresist has been partially cured by the above selective UV radiation of selected regions thereof, the substrate 2000 from which the stamp 530 has been separated is carried to the curing unit 600 by an intermediate carrying unit 1000 (S1160).

The substrate 2000 is placed securely on the second substrate supporting unit 620, and the heater 635 then fully cures the thermosetting portion of the hybrid photoresist mixture on the substrate by radiating it with heat (S1170). The fully cured substrate 2000 is then carried to the etching unit 700 (see FIG. 1) situated downstream of the curing unit 600 for subsequent processing.

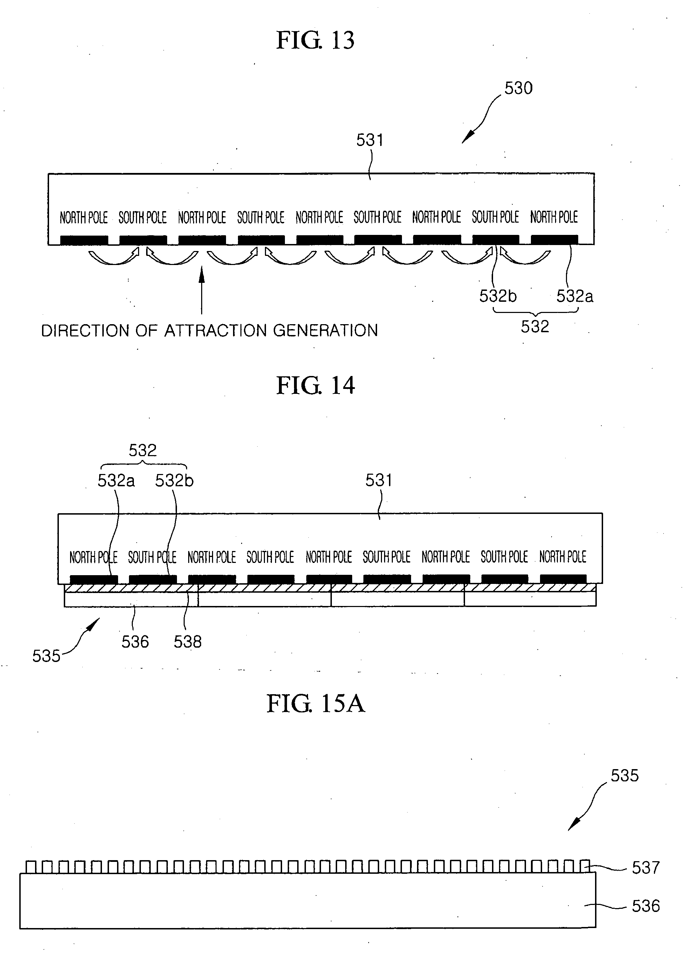

FIG. 12 is a schematic cross-sectional sectional view of an exemplary embodiment of a stamp in accordance with the present invention. FIG. 13 is a schematic elevation view of a plurality of unit stamps attached to a base plate. FIG. 14 is a schematic cross-sectional view of an alternative exemplary embodiment of a stamp in accordance with the present invention;

Referring to FIGS. 12 and 13, the first exemplary stamp 530 includes a base plate 531, a plurality of magnets 532, and a plurality of unit stamps 535.

As illustrated in FIG. 12, first and second magnets having opposite polarities, that is, north pole magnets 532a, and south pole magnets 532b, are embedded in adjacent, alternating fashion in a surface of the base plate 531. The plurality of unit stamps 535 is then attached to the surface of the base plate 531 in which the magnets 532 are embedded. In this embodiment, fine, stripe-like patterns (not illustrated) are formed on respective ones of the unit stamps 535.

The principle by which the unit stamps 535 are attached to the base plate 531 is described in more detail with reference to FIG. 13. In FIG. 13, the north pole magnets 532a and the south pole magnets 532b are arranged in alternating fashion in the same plane of the base plate 531 lower surface. In this structure, magnetic flux flows from the north poles of the magnets to the south poles thereof. According to Lorentz's law of magnetic theory, in such an arrangement, an electrostatic attraction is generated in a direction perpendicular to the direction of the magnetic flux, that is, in a direction extending from the bottom of the structure to the top of the structure, as indicated by the arrow in FIG. 13. When an electrostatic attraction force is generated in accordance with this theory, metal materials will attach electrostatically to the lower surface of the base plate 531 when placed against it.

Either a silicon or a quartz wafer may be used as the substrate of a unit stamp 535. Since the silicon wafer is itself a conductor, as shown in FIG. 12, a unit stamp 535 formed of a silicon wafer will attach to the base plate without the need for a conductive metal layer coating thereon. However, when a quartz wafer is used as the substrate of a unit stamp 535, since the quartz wafer is an electrical insulating material, a conductive metal layer 538 is additionally formed on the attaching surface of the unit stamp 535, as illustrated in FIG. 14. Additionally, even when a silicon wafer is used as the substrate, a conductive metal layer 538 may optionally be formed thereon to strengthen the force of electrostatic attraction.

Accordingly, when a large stamp is fabricated by attaching a plurality of the unit stamps 535 to the substrate 531 using the electrostatic attraction force of the embedded magnets, the process may be advantageously used in a high cleaning chamber or even a vacuum chamber. Thus, although a known air induction, or "vacuum chuck" method cannot be applied in a vacuum, the electrostatic attraction method can be applied even in a vacuum atmosphere, and the resulting stamp assembly is not easily disturbed, even when used over a long period time, since the strength of the electrostatic attraction remains substantially constant.

FIGS. 15A to 15D are schematic cross sectional views of a substrate respectively illustrating sequential processes of an exemplary embodiment of a method for manufacturing a unit stamp in accordance with the present invention. Referring to FIGS. 15A to 15D, first, a fine pattern of metal lines extending in one direction, that is, a wire grid pattern 537, is formed on a surface of a unit stamp substrate 536 formed of a circular silicon or quartz wafer, as illustrated in FIG. 15A.

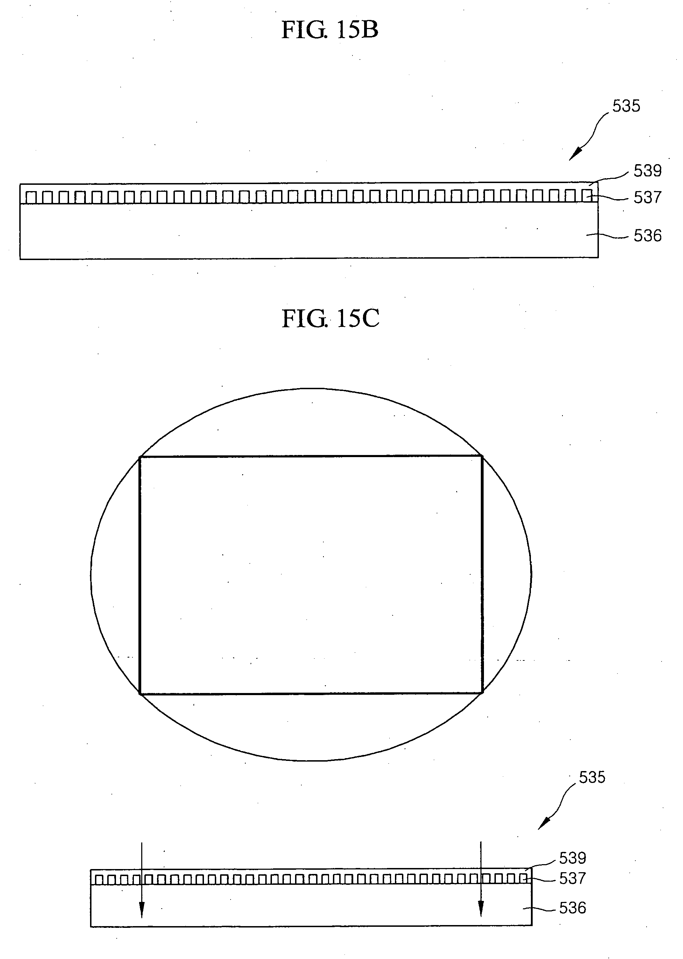

As illustrated in FIG. 15B, a protective layer 539 is the formed over the entire surface of the unit stamp substrate 536 on which the wire grid pattern 537 is formed. In this particular embodiment, the protective layer 539 is formed by applying a layer of an organic material comprising a photoresist or a soluble polymer, and then baking the organic material layer.

Then, as illustrated in FIG. 15C, the unit stamp substrate 536 on which the wire grid pattern 537 and protective layer 539 are formed, is cut into a rectangular or square shape using, for example, a diamond cutting wheel or a laser.

After the unit stamp substrate 536 has been cut as above, the manufacture of the unit stamp 535 is completed by removing the protective layer 539 on the unit stamp, as illustrated in FIG. 15D.

When the foregoing processes are performed in the above order, *i.e.,* forming the protective layer, cutting the unit stamp substrate and then removing the protective layer, this prevents the wire grid pattern on the substrate from being contaminated or damaged during the cutting process.

FIG. 16 is a schematic elevation view an exemplary embodiment of a stamping unit of an exemplary system for manufacturing wire grid polarizers of the present invention.

The pressing unit 540 of the stamping unit 500 is described in greater detail with reference to FIG. 16. The pressing unit 540 of the stamping unit 500 includes a pressing chamber 541, a gas pressure applying unit for injecting gas into the pressing chamber 541 and applying gas pressure to the interior of the pressing chamber 541, and a gas pressure correcting unit 545 for maintaining a uniform gas pressure in the interior of the pressing chamber 541.

The gas pressure applying unit includes a gas supply source (not illustrated) provided outside the pressing chamber 541 and configured to supply a gas for injection into the pressing chamber 541, and gas injection holes 543 formed in a wall of the pressing chamber 541.

The gas pressure correcting unit 545 includes a plurality of spring members provided symmetrically inside the pressing chamber 541.

When gas is injected into the pressing chamber through the gas injection holes 543 formed in the wall of the pressing chamber 541, it is possible that the pressure of the gas will not be applied evenly to the stamp because the pressure is applied to the stamp locally, depending on the position of gas injection holes, which could result in the stamp being pressed onto the substrate 520 in a non-uniform manner.

However, even though the gas pressure may be applied non-uniformly over the surface of the stamp 530, *i.e.,* may be greater in certain areas of the stamp than in others, thereby resulting in the stamp being pressed more in those positions and resulting in a non-uniform displacement, the gas pressure correcting unit 545 also includes a plurality of spring members that compensate for the pressure differences and act to restore the equilibrium of the applied pressure by offsetting the differences in displacement of the stamp due to the imbalanced pressure.

Further, the gas pressure applying unit can inject the gas into the pressing chamber 541 almost instantaneously, or alternatively, can inject the gas into the chamber in discrete, incremental steps. Accordingly, it is possible to apply pressure to the chamber in one or in multiple steps.

The openings 515 for opening and closing the stamping chamber may be provided in the side wall of the stamping chamber 510 of the stamping unit 500.

According to the exemplary embodiments of the present invention described above, the processing time for manufacturing a wire grid polarizer can be greatly reduced by arranging the respective processing units of systems for manufacturing the polarizers in an inline arrangement. Additionally, the systems and methods of the present invention make it possible to increase the size of a wire grid polarizer and to enhance the precision of the manufacturing processes by attaching a plurality of unit stamps to a base plate using electrostatic force, thereby enabling the size of the stamps to be increased.

By now, those of skill in this art will appreciate that many modifications, substitutions and variations can be made in and to the systems and methods for manufacturing wire grid polarizers of the present invention without departing from its spirit and scope. In light of this, the scope of the present invention should not be limited to that of the particular embodiments illustrated and described herein, as they are only exemplary in nature, but instead, should be fully commensurate with that of the claims appended hereafter and their functional equivalents.

## Claims

1. A system for manufacturing a wire grid polarizer, comprising:
a deposition unit for forming a thin metal film layer on a substrate;
a coating unit for applying a photoresist on the thin metal film layer and for baking the photoresist;
a stamping unit, including a stamp on which a pattern is formed, for pressing the stamp onto the photoresist of the substrate and thereby transferring a pattern of the stamp to the photoresist; and,
a curing unit for curing the photoresist.

2. The system of claim 1, further comprising:
an etching unit for etching the thin metal film layer; and,
an ashing unit for removing the photoresist.

3. The system of claim 2, further comprising:
a loading unit for loading the substrate into the system;
a cleaning unit for cleaning the substrate;
an unloading unit for unloading the substrate from the substrate; and,
a plurality of carrying units for carrying the substrate within the system.

4. The system of claim 3, wherein the units are arranged in line with each other in the order of the loading unit, the cleaning unit, the deposition unit, the coating unit, the stamping unit, the curing unit, the etching unit, the ashing unit and the unloading unit, and wherein respective ones of the carrying units are disposed between adjacent pairs of the other units.

5. The system of claim 1, wherein the stamping unit further comprises:
a stamping chamber;
a first substrate supporting unit provided in the stamping chamber and configured to support the substrate; and,
a pressing unit for applying pressure to the stamp so as to press the stamp onto the photoresist on the substrate.

6. The system of claim 5, wherein the stamp comprises:
a base plate;
first and second magnets having opposite polarities arranged in alternating fashion and embedded in a first surface of the base plate; and,
a plurality of unit stamps electrostatically adhered to the first surface of the base plate.

7. The system of claim 6, wherein each unit stamp comprises:
a unit stamp substrate having opposite first and second surfaces; and,
a fine pattern extending in one direction on the first surface of the unit stamp substrate.

8. The system of claim 7, wherein the unit stamp further comprises a metal conductive layer on the second surface of the unit stamp substrate.

9. The system of claim 7, wherein the unit stamp substrate comprises a silicon wafer or a quartz wafer.

10. The system of claim 5, wherein the pressing unit comprises:
a pressing chamber; and,
a gas pressure applying unit for injecting gas into the pressing chamber and applying gas pressure to an interior of the pressing chamber.

11. The system of claim 10, wherein the pressing unit further comprises a gas pressure correcting unit for maintaining uniformity of the gas pressure applied to the interior of the pressing chamber.

12. The system of claim 11, wherein the gas pressure applying unit comprises:
a gas supply source provided outside of the pressing chamber and configured to supply gas for injection into the pressurizing chamber; and,
gas injection holes formed in a wall of the pressing chamber.

13. The system of claim 11, wherein the gas pressure correcting unit comprises a plurality of spring members provided inside the pressurizing chamber.

14. The system of claim 5, further comprising a stamp storing chamber for storing waiting stamps.

15. The system of claims 1 or 5, wherein the curing unit comprises:
a curing chamber;
a second substrate supporting unit provided in the curing chamber and configured to support the substrate; and,
a curing source unit for curing the photoresist.

16. The system of claim 15, wherein the photoresist comprises a UV-curable photoresist or a thermosetting photoresist.

17. The system of claim 16, wherein the curing source unit comprises a UV light source or a heater.

18. The system of claim 15, wherein the photoresist comprises a hybrid photoresist comprising a mixture of a UV-curable photoresist and a thermosetting photoresist.

19. The system of claim 18, wherein:
the stamping unit further comprises a UV light source for curing the UV-curable photoresist of the hybrid photoresist; and,
the curing source unit of the curing unit comprises a heater for curing the thermosetting photoresist of the hybrid photoresist.

20. The system of claim 19, wherein the stamping unit further comprises a UV light blocking unit for blocking a part of the UV light radiated from the UV light source.

21. The system of claim 20, wherein the UV light blocking unit comprises a metal film.

22. The system of claim 2, wherein the etching unit dry-etches the thin metal film layer.

23. A method for manufacturing a wire grid polarizer, the method comprising:
providing a substrate;
forming a thin metal film layer on the substrate;
applying a photoresist to the thin metal film layer;
baking the substrate to which the photoresist has been applied;
providing a stamp having a pattern thereon;
aligning the stamp with the photoresist of the substrate,
pressing the stamp onto the photoresist of the substrate to transfer the pattern of the stamp to the photoresist;
curing the photoresist;
separating the stamp from the substrate; and,
etching the thin metal film layer of the substrate.

24. The method of claim 23, wherein applying a photoresist to the thin metal film layer comprises applying a UV-curable photoresist or a thermosetting photoresist to the thin metal film layer.

25. The method of claim 24, wherein curing the photoresist comprises radiating UV light on or applying heat to the photoresist.

26. The method of claim 23, wherein providing a stamp comprises providing a plurality of stamps.

27. A method for manufacturing a wire grid polarizer, the method comprising:
providing a substrate;
forming a thin metal film layer on the substrate;
applying a photoresist to the thin metal film layer;
baking the substrate to which the photoresist is applied;
providing a stamp having a pattern thereon;
aligning the stamp with the photoresist of the substrate;
pressing the stamp on the photoresist of the substrate to transfer the pattern of the stamp to the photoresist;
partially curing the photoresist;
separating the stamp from the substrate;
fully curing the photoresist; and,
etching the thin metal film layer of the substrate.

28. The method of claim 27, wherein applying a photoresist to the thin metal film layer comprises applying a hybrid photoresist comprising a mixture of a UV-curable photoresist and a thermosetting photoresist to the thin metal film layer.

29. The method of claim 28, wherein partially curing the photoresist comprises irradiating the photoresist with UV light.

30. The method of claim 29, wherein:
providing a stamp comprises providing a stamp that is smaller than the substrate; and,
partially curing the photoresist comprises irradiating a region of the substrate on which the stamp has been pressed with UV light.

31. The method of claim 30, wherein the aligning of the stamp with the substrate, the pressing of the stamp on the photoresist of the substrate, the partially curing of the photoresist, and the separating of the stamp from the substrate are repeated reiteratively until the pattern of the stamp is transferred throughout the region of the photoresist of the substrate.

32. The method of claim 28, wherein fully curing the photoresist comprises applying heat to the photoresist.

33. The method of claims 23 or 27, wherein providing a stamp comprises providing a plurality of unit stamps.

34. The method of claim 33, wherein providing a plurality of unit stamps comprises:
providing a base plate;
embedded first and second magnets in a first surface of the base plate, the magnets having opposite polarities and being arranged in alternating fashion; and,
electrostatically attaching the plurality of unit stamps to the first surface of the base plate.

35. The method of claim 33, wherein providing a plurality of unit stamps comprises:
providing a unit stamp substrate having opposite first and second surfaces;
forming a fine pattern on the surface of the unit stamp substrate;
forming a protective layer over the first surface of the unit stamp and the fine pattern thereon;
cutting the unit stamp substrate; and,
removing the protective layer.

36. The method of claim 35, wherein forming a protective layer comprises:
applying a layer of an organic material layer comprising a photoresist or a soluble polymer to the first surface of the unit stamp substrate and the fine pattern thereon; and,
baking the organic material layer.

37. The method of claim 35, wherein providing a plurality of unit stamps further comprises forming a metal conductive layer on the second surface of the unit stamp substrate.
